# EUROPÄISCHE PATENTSCHRIFT

(11) **EP 2 002 874 B1**
(45) Veröffentlichungstag und Bekanntmachung des Hinweises auf die Patenterteilung: **26.01.2011**
(21) Anmeldenummer: 07011341.0
(22) Anmeldetag: 09.06.2007
(51) Int. Cl.: B01D 29/41, B01D 35/26

(54) **Filtervorrichtung**
Filter device
Dispositif de filtration

(43) Veröffentlichungstag der Anmeldung: 17.12.2008
(73) Patentinhaber: Grundfos Management A/S, 8850 Bjerringbro (DK)
(72) Erfinder: Rasmussen, Christian, 8830 Tjele (DK)
(74) Vertreter: Vollmann, Heiko

(56) Entgegenhaltungen:
- WO-A-2004/069372
- WO-A-2006/084858
- DE-A1- 10 331 463

## Beschreibung

Die Erfindung betrifft eine Filtervorrichtung mit den im Oberbegriff des Anspruchs 1 angegebenen Merkmalen.

Bekannte Filtervorrichtungen der vorgenannten Art bestehend typischerweise aus Stapeln von hohlen Filterplatten, die in einem im Wesentlichen zylindrischen und geschlossenen Filtergehäuse ggf. auch rotierend angeordnet sind. Die zu filternde Flüssigkeit wird mittels einer Pumpe in das Gehäuse eingeleitet, gelangt durch die im Bereich der Oberfläche der Filterplatten gebildeten Filter in das Innere der Platten, wo das Filtrat über einen zentralen Kanal abgezogen wird. Derartige Filterplatten sind beispielsweise aus DE 196 24 176 A1 oder EP 0 723 791 bekannt, entsprechende Filtervorrichtungen sind aus DE 196 24 176 A1 , WO 2004/069372 sowie aus US-PS-5,326,512 bekannt.

Ein Problem bei derartigen Filtervorrichtungen ist stets die Abfuhr des sich auf den Oberflächen der Filterplatten im Laufe der Zeit bildenden Filterkuchens. Diese Rückstände müssen nach Möglichkeit kontinuierlich abgeführt werden, damit sich ein solch fester Belag gar nicht erst bilden kann. Die Verwendung mechanischer Abstreifer ist konstruktiv aufwändig und wird typischerweise nur bei Biofiltern angewendet, um den Bewuchs der Filteroberfläche konstant zu halten. Mechanische Filtervorrichtungen der in Rede stehenden Art werden daher meist durch Rückspülen gereinigt, was jedoch den kontinuierlichen Betrieb der Anlage stört und zudem die nutzbare Menge des gewonnenen Filtrats verringert.

Aus DE 196 24 176 A1 ist es bereits bekannt, die Filterplatte an ihrer Oberfläche derart zu profilieren, dass bei Rotation des Filterplattenstapels eine gewisse radiale Pumpwirkung erzeugt wird, welche für eine Strömung an der Filteroberfläche, insbesondere zur Entfernung von Rückständen auf der Filterfläche sorgen soll. Nachteilig bei dieser bekannten Anordnung ist allerdings, dass die sich aufgrund der Oberflächenprofilierung einstellende Pumpwirkung vergleichsweise gering ist und damit den gewünschten Effekt nicht oder nur in sehr geringem Maße erreicht. Eine schnellere Rotation des Plattenstapels führt darüber hinaus zu erhöhter mechanischer Belastung der gesamten Vorrichtung und bedingt einen höheren Energieeinsatz.

Vor diesem Hintergrund liegt der Erfindung die Aufgabe zugrunde, eine gattungsgemäße Filtervorrichtung so auszubilden, dass bei möglichst einfachem konstruktiven Aufwand eine hohe Filter- und Selbstreinigungswirkung des Filters erreicht wird.

Diese Aufgabe wird gemäß der Erfindung durch die in Anspruch 1 angegebenen Merkmale gelöst. Vorteilhafte Ausgestaltungen der Erfindung sind in den Unteransprüchen, der nachfolgenden Beschreibung und der Zeichnung angegeben.

Die erfindungsgemäße Filtervorrichtung weist ein Gehäuse, typischerweise ein geschlossenes Gehäuse auf, in dem ein Stapel von mit Abstand zueinander angeordneten Filterplatten angeordnet ist. Das Gehäuse weist einen Einlass für die zu filtrierende Flüssigkeit auf und einen Auslass, welcher mit dem Inneren der Filterplatten leitungsverbunden ist, so dass hierüber das Filtrat abgezogen werden kann. Durch den Stapel von Filterplatten hindurch erstreckt sich ein Hohlraum, der durch Ausnehmungen in den Filterplatten gebildet ist. Der Filterplattenstapel ist gehäusefest angeordnet, wobei innerhalb dieses Filterplattenstapels eine Kreiselpumpe mit mehreren Kreiselrädern angeordnet ist.

Diese erfindungsgemäße Lösung ermöglicht einen konstruktiv einfachen Aufbau der Filtervorrichtung, da nämlich der Filterplattenstapel ortsfest innerhalb des insbesondere als geschlossenes Behältnis ausgebildeten Gehäuses angeordnet ist. Die innerhalb des Filterplattenstapels angeordnete Kreiselpumpe mit mehreren Kreiselrädern kann je nach Ausgestaltung für eine bessere Durchströmung der Filterplatten und/oder für eine bessere Umströmung der Filterplatten sorgen, wodurch die Ablagerung von Filterrückständen auf den Filterplatten verhindert oder zumindest vermindert werden kann oder diese ggf. auch durch erhöhte Pumpwirkung entfernt werden kann. Die erfindungsgemäße Ausgestaltung ermöglicht darüber hinaus eine extrem kompakte Bauform, da die Bauteile der Pumpe innerhalb des Filterplattenstapels angeordnet sind, was darüber hinaus auch deren Wirksamkeit erhöht, da Strömungsverluste über Rohrleitungen und dergleichen weitgehend vermieden werden.

Grundgedanke der vorliegenden Erfindung ist es somit, den Filterplattenstapel ortsfest innerhalb des Gehäuses anzuordnen und zur Durchströmung in den Filterplattenstapel eine Kreiselpumpe einzugliedern. Dabei wird der Filterplattenstapel mit der darin liegenden mehrrädrigen Kreiselpumpe zweckmäßigerweise so ausgebildet, dass der Filterplattenstapel Teil des sonst üblichen Pumpengehäuses bildet.

Gemäß der Erfindung erstrecken sich die Kreiselräder vorteilhaft so innerhalb des Scheibenstapels, dass sie jeweils zwischen benachbarten Filterplatten angeordnet sind und somit für eine gute Abfuhr der Filterrückstände von den Filterplatten sorgen. Dabei dient der vorzugsweise zentrale Hohlraum zur Zufuhr der zu filternden Flüssigkeit. Bei einer solchen Ausgestaltung sind die Kreiselräder zweckmäßigerweise jeweils zu beiden Seiten, also zu beiden benachbarten Filterplatten hin, offen ausgebildet und weisen einen zentralen Saugbereich auf, welcher innerhalb des Hohlraums liegt. Bei dieser Ausführung kann das Kreiselrad in sehr einfacher Form durch ein Kunststoffspritzgussteil ausgebildet werden, das bei Rotation nicht nur eine Pumpwirkung, sondern auch eine mechanische Abstreifwirkung oder zumindest eine Verwirbelung in den filteroberflächennahen Bereichen erzeugen kann.

Alternativ kann innerhalb des Hohlraums eine mehrrädrige Kreiselpumpe eingegliedert werden, welche so angeordnet und ausgebildet ist, dass die Druckseite der Kreiselräder im Wesentlichen radial gerichtet ist und sich eine vom Außenumfang der Kreiselräder ausgehende Durchströmung des Filterplattenstapels längs der Filteroberflächen bei Rotation der Kreiselräder ergibt.

Besonders vorteilhaft ist es, wenn der jeweils zwischen benachbarten Filterplatten gebildete freie Zwischenraum von einem Kreiselrad dieser Kreiselpumpe beaufschlagt wird, zweckmäßigerweise derart, dass jedem der benachbarten Zwischenräume ein Kreiselrad zugeordnet ist, so dass eine intensive und gleichmäßige Durchströmung des gesamten Stapels erfolgt. Es versteht sich, dass je nach höhenmäßiger Ausbildung des Kreiselrads auch ein Kreiselrad einer Gruppe benachbart nebeneinander liegender Zwischenräume zugeordnet sein kann, um dies zu erreichen.

Gemäß einer vorteilhaften Weiterbildung der Erfindung sitzen die Kreiselräder nicht unmittelbar angrenzend innerhalb des Filterplattenstapels, sondern sind von einem rohrförmigen, vorzugsweise zylindrischen Zwischengehäuse umgeben, welches in dem im Filterplattenstapel gebildeten Hohlraum sitzt und an das der Plattenstapel vorzugsweise dichtend anschließt. Dabei weist das Zwischengehäuse im Bereich der Freiräume zwischen benachbarten Filterplatten Durchbrüche auf, durch welche die Druckseite des zugeordneten Kreiselrades mit dem zugeordneten Zwischenraum fluidleitend verbunden ist. Ein solches Zwischengehäuse ist aus mehreren Gründen vorteilhaft. Zum einen kann hiermit ein dichter Anschluss an den Filterplattenstapel gebildet werden, der typischerweise aus keramischen Werkstoffen besteht und daher vergleichsweise spröde und gegen mechanische Biege- und Schlagbelastungen empfindlich ist. Das Zwischengehäuse schirmt den rotierenden Teil der Kreiselpumpe, also die darin angeordneten Kreiselräder gegenüber dem Filterplattenstapel ab. Zwischengehäuse und Kreiselräder können in vergleichsweise engen Toleranzen hergestellt werden, was den Wirkungsgrad der Pumpe erhöht. Über die Durchbrüche im Zwischengehäuse, die vorteilhaft langlochartig ausgebildet und so angeordnet sind, dass sie einen möglichst großen Freiraum zwischen der Druckseite des Kreiselrades und dem zugeordneten Zwischenraum bilden, kann eine gezielte Durchströmung der Zwischenräume erfolgen, Strömungsverluste, wie sie durch Auftreffen der Strömung auf die Stirnseiten der Filterplatten erfolgen würden, werden dadurch vermieden.

Das Zwischengehäuse kann gemäß der Erfindung ein- oder mehrteilig ausgebildet sein, kann aus Metall, Kunststoff oder anderen geeigneten Werkstoffen bestehen. Gemäß einer vorteilhaften Weiterbildung der Erfindung ist das Zwischengehäuse aus mehreren Gehäuseabschnitten aufgebaut, wobei bevorzugt jeder Gehäuseabschnitt einem Kreiselrad zugeordnet ist. Solche Gehäuseabschnitte können kostengünstig als Kunststoffspritzgussteile ausgebildet sein und werden über eine Bajonett- oder andere geeignete Verbindung formschlüssig miteinander verbunden. Eine solche Ausbildung ermöglicht einen quasi modularen Aufbau der Pumpe, so dass mit gleichen Bauteilen Kreiselpumpen unterschiedlicher Größe realisiert werden können.

Zweckmäßigerweise ist dann jedem Gehäuseabschnitt des Zwischengehäuses eine Filterplatte zugeordnet, wobei zwischen der Außenseite des Gehäuseabschnitts und der jeweiligen Filterplatte eine radiale Abdichtung erfolgt, sei es durch den Gehäuseabschnitt selbst oder durch eine gesonderte Dichtung. Eine gute Abdichtung zwischen Gehäuseabschnitt und Filterplatte erhöht zum einen die Pumpwirkung innerhalb des Filterplattenstapels und ermöglicht zum anderen insbesondere das In-Reihe-Schalten von hintereinander liegenden Kreiselrädern mit den entsprechend zugeordneten Filterplatten bzw. Filterplattenzwischenräumen.

Ungeachtet dessen, ob das Zwischengehäuse aus Gehäuseabschnitten oder einteilig ausgebildet ist, werden die innerhalb des Plattenstapels angeordneten Kreiselräder vorteilhaft so dimensioniert, dass sie bis nahe an das Zwischengehäuse reichen, wobei gemäß einer Weiterbildung der Erfindung diese Kreiselräder sowohl saugseitig als auch druckseitig radial gegenüber dem Zwischengehäuse abgedichtet sind, um eine möglichst hohe Pumpwirkung zu erreichen und einen hydraulischen Kurzschluss in diesem Bereich zu vermeiden. Dabei erfolgt die Abdichtung der Kreiselräder vorzugsweise sowohl saugseitig als auch druckseitig auf gleichem Durchmesser, typischerweise den Innendurchmesser des Zwischengehäuses.

Gemäß einer vorteilhaften Weiterbildung der Erfindung können den innerhalb des Plattenstapels angeordneten Kreiselrädern ein oder mehrere Kreiselräder innerhalb des Gehäuses fluidisch vorgeschaltet sein. Eine solche Anordnung hat den Vorteil, dass auf eine zusätzliche Pumpe zum Beschicken der Filtervorrichtung ggf. verzichtet werden kann. Darüber hinaus ist die Pumpwirkung besonders günstig, da die Pumpe unmittelbar vor dem Plattenstapel liegt und somit druckseitig quasi in den Plattenstapel fördert.

Um den Plattenstapel mit möglichst hohem Druck anzuströmen, können die den Kreiselrädern innerhalb des Plattenstapels vorgeschalteten Kreiselräder als mehrstufige Kreiselpumpe ausgebildet und angeordnet sein. Hierzu ist das Gehäuse der Vorrichtung dann entsprechend ausgebildet, bildet vorteilhaft also gleichzeitig das Pumpengehäuse.

Das Gehäuse wird vorteilhaft im Bereich der vorgeschalteten Kreiselräder an diese angepasst, bildet also quasi eine zylindrische Ausnehmung für diese Kreiselräder und ist im Übrigen an den Plattenstapel angepasst, der vorteilhaft ebenfalls zylindrisch ausgebildet ist. Das Gehäuse kann daher in einfacher Form zylindrisch ausgebildet sein und ist daher kostengünstig herstellbar. Das Gehäuse kann im Wesentlichen durch ein ggf. abgestuftes Zylinderrohr mit zwei inseitigen Deckeln gebildet sein, wobei die Deckel zur Aufnahme von Ab- oder Zufuhrkanälen ausgebildet sind. Bei einer solchen Gehäuseausbildung sind lediglich die Deckel aufwändiger zu bearbeiten, wohingegen die zylindrischen Teile als Drehteile oder gar als Strangussteile gefertigt werden können.

Zweckmäßigerweise sitzen sowohl die Kreiselräder innerhalb des Filterplattenstapels als auch die vorgeschalteten Kreiselräder auf einer gemeinsamen Welle. Insbesondere dann ist es vorteilhaft, wenn die vorgeschalteten Kreiselräder einen größeren Durchmesser als die innerhalb des Plattenstapels angeordneten haben, da diese dann bei gleicher Drehgeschwindigkeit eine höhere Umfangsgeschwindigkeit haben und somit eine höhere Pumpwirkung entfalten.

Gemäß einer Weiterbildung der Erfindung sitzen die Kreiselräder nicht nur drehfest auf einer gemeinsamen Welle, sondern sind so ausgebildet und angeordnet, dass sie zusammen mit dem Zwischengehäuse eine zusammen handhabbare Einheit bilden. Diese Anordnung ist nicht nur für Wartungszwecke besonders günstig, da die gesamte Pumpe dann aus dem Plattenstapel herausgezogen werden kann, sondern auch konstruktiv, insbesondere wenn die Bauteile aus unterschiedlichen Fertigungen stammen und erst vor Ort zusammengefügt werden können.

Um die Welle, die insbesondere bei hohen Filterplattenstapeln vergleichsweise lang ausgebildet sein kann, sicher zu lagern, ist zweckmäßigerweise mindestens ein Lager innerhalb des Plattenstapels angeordnet und vorteilhaft in dem im Betrieb ortsfesten Zwischengehäuse abgestützt. Das andere Lager kann am antriebsseitigen Ende der Welle, also vorteilhaft außerhalb des Gehäuses vorgesehen sein. Dann ist auch nur ein Ende der Welle aus dem Gehäuse der Vorrichtung herauszuführen, so dass nur eine Abdichtung gegenüber dem Gehäuse erforderlich ist. Der Antriebsmotor wird zweckmäßigerweise an dem aus dem Gehäuse herausgeführten Wellenende angekoppelt und an der Außenseite des Gehäuses befestigt, so dass der Motor von der Flüssigkeit abgeschirmt außerhalb des Gehäuses sitzt, zweckmäßigerweise auf dem Gehäuse, so dass auch bei Versagen der Wellendichtung der Motor trocken bleibt.

Es kann vorteilhaft sein, die innerhalb des Plattenstapels angeordneten Kreiselräder hydraulisch parallel zu schalten. Dann sollten diese saugseitig über einen Kanal miteinander fluidleitend verbunden sein, damit die zu filternde Flüssigkeit an allen Kreiselrädern mit im Wesentlichen gleichen Druck ansteht. Dann sollten die Filterplatten bzw. die dazwischen gebildeten Zwischenräume ebenfalls parallel geschaltet werden, damit über den gesamten Filterplattenstapel eine gleichmäßige Spülwirkung erzielt wird.

Je nach Anwendungsfall kann es jedoch auch vorteilhaft sein, zwei oder mehrere innerhalb des Plattenstapels angeordnete Kreiselräder in Reihe oder gruppenweise in Reihe zu schalten. Es versteht sich, dass dann auch die Filterplatten bzw. die dazwischen gebildeten Zwischenräume entsprechend in Reihe geschaltet sind. Bei einer solchen Anordnung erfolgt die Dimensionierung zweckmäßigerweise so, dass die einzelnen Laufräder eine Druckerhöhung erzeugen, welche etwa dem Druckabfall in den daran hydraulisch anschließenden Zwischenräumen entspricht. Eine solche Anordnung hat den Vorteil, dass die Filterplatten als solche wenig druckbeansprucht werden, insbesondere keiner druckbedingten Verformung unterworfen sind.

Ein wesentlicher Vorteil der erfindungsgemäßen Ausbildung liegt darin, dass der Filterplattenstapel innerhalb des Gehäuses festgelegt ist, d. h. die Entfernung der Filterrückstände von den Filterplatten durch die innerhalb des Plattenstapels angeordneten Kreiselpumpen erfolgt, insbesondere durch die dadurch erzeugte Strömung, und nicht, wie beim Stand der Technik, durch Drehen des Stapels. Um den Plattenstapel innerhalb des dort zylindrischen Raums festzulegen und gleichzeitig eine gleichmäßige Filtratabfuhr über den gesamten Stapel zu erzielen, ist es vorteilhaft, diesen durch vorzugsweise drei zur Stapelachse parallel angeordnete Filtratabzugsrohre zu fixieren, welche den Filterplattenstapel durchsetzen und mit dem Inneren der Filterplatten leitungsverbunden sind. Diese Filtratabzugsrohre sind nach außen hin, also zu den zwischen den Filterplatten gebildeten Zwischenräumen abgedichtet und jeweils mit ihren beiden Enden an den stirnseitigen Gehäuseteilen festgelegt.
Die bei der erfindungsgemäßen Filtervorrichtung eingesetzten Filterplatten sind vorteilhaft jeweils durch zwei beabstandete Filterscheiben, insbesondere Keramikscheiben gebildet, zwischen denen eine Stützscheibe angeordnet ist und die am Außen- und Innenumfang zueinander im Wesentlichen abgedichtet sind. Die Stützscheibe ist dabei mit einer Vielzahl von Kanälen versehen, um über die gesamte Fläche eine Abfuhr des die Filterscheiben durchdringenden Filtrats zu gewährleisten. Die Stützscheiben können als Kunststoffspritzgussteile ausgebildet sein und sind so ausgebildet, dass sie einerseits für eine gute Filtratabfuhr über die gesamte Fläche der Filterscheiben sorgen, andererseits jedoch diese möglichst großflächig abstützen, um auf diese Weise druckbedingte Biegebelastungen der Filterscheiben weitgehend zu vermeiden.

Vorteilhaft weisen die Stützscheiben in ihrer radialen Erstreckung die gleiche Größe wie die Keramikscheiben auf, so dass sie die Keramikscheiben von ihrem Innenumfang bis zum Außenumfang hin abstützen. Um bei dieser flächigen Abstützung eine gute Filtratabfuhr zu gewährleisten, ist es zweckmäßig, die Kanäle auf der Stützscheibe beidseitig oder durchgehend, und zwar in konzentrischen Ringen über ihre gesamte Oberfläche anzuordnen, wobei die in konzentrischen Ringen angeordneten Kanäle vorteilhaft von radial verlaufenden Kanälen gekreuzt werden, die zu Durchbrechungen führen, welche die Filtratabzugsrohre aufnehmen und die mit diesen leitungsverbunden sind. Die Kanäle selbst sind entweder zu beiden Seiten der Stützscheiben ausgebildet oder durch Ausnehmungen in den Stützscheiben gebildet und zur jeweils anliegenden Keramikscheibe hin offen, d. h. sie werden durch in der Oberfläche der Stützscheiben gebildete Vertiefungen oder Ausnehmungen gebildet, die durch die anliegende Keramikscheibe kanalbildend begrenzt werden.

Die Erfindung ist nachfolgend anhand von in der Zeichnung dargestellten Ausführungsbeispielen näher erläutert. Es zeigen:
- Fig. 1: eine Filtervorrichtung in vereinfachter, schematischer Darstellung im Längsschnitt mit montiertem Antriebsmotor,
- Fig. 2: die Filtervorrichtung gemäß Fig. 1 in perspektivischer Ansicht ohne Motor,
- Fig. 3: einen Schnitt längs der Schnittlinie III-III in Fig. 1
- Fig. 4: eine weitere Ausführungsform einer Filtervorrichtung in vergrößerter Darstellung gemäß Fig. 1,

- Fig. 5: in perspektivischer Ansicht die innerhalb der Filtervorrichtung angeordnete Kreiselpumpeneinheit,
- Fig. 6: die Einheit gemäß Fig. 5 im Längsschnitt,
- Fig. 7: in vergrößerter Darstellung die Einzelheit VII in Fig. 6,
- Fig. 8: in vergrößerter Darstellung die Einzelheit VIII in Fig. 6,
- Fig. 9: eine keramische Filterscheibe in perspektivischer Ansicht und
- Fig. 10: eine Stützscheibe in perspektivischer Ansicht.

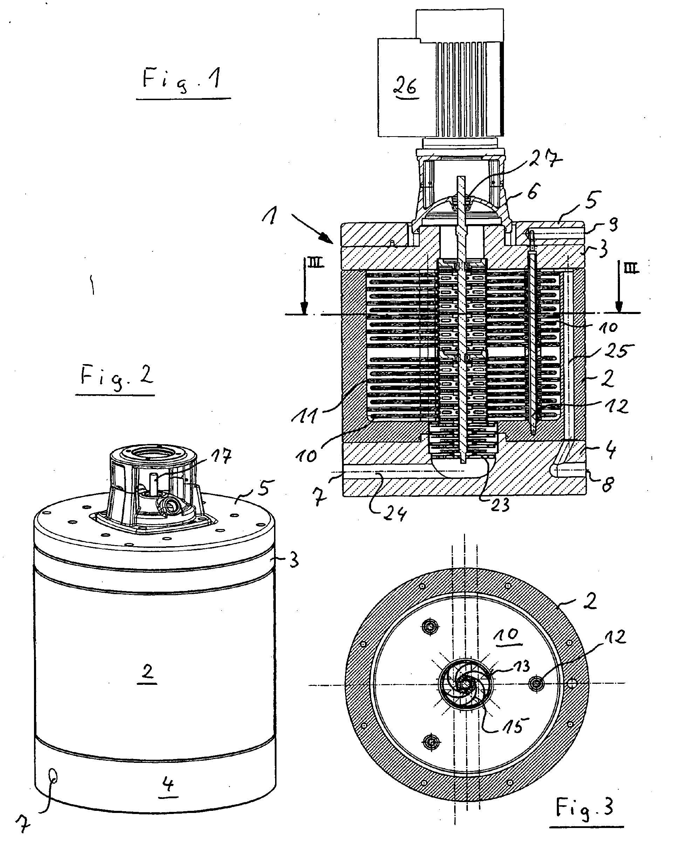

Die anhand der Figuren 1 bis 3 dargestellte Filtervorrichtung weist ein im Wesentlichen zylindrisches Gehäuse 1 auf, das bei der dargestellten Ausführungsform aus einem topfförmigen Gehäuseteil 2, einem dieses Gehäuseteil 2 nach oben abschließenden Deckelteil 3 und einem Bodenteil 4 gebildet ist, welches sich an den topfförmigen Gehäuseteil 2 nach unten anschließt. Der Deckelteil 3 ist nach oben durch einen ringförmigen Gehäuseteil 5 überdeckt. An den Deckelteil 3 schließt sich nach oben ein Kupplungsgehäuseteil 6 an, das mit Abstand innerhalb des ringförmigen Gehäuseteils 5 eingegliedert ist. Das so gebildete Gehäuse 1 bildet ein geschlossenes Behältnis, das im Bodenteil 4 einen Einlass 7 für die zu filternde Flüssigkeit sowie einen Auslass 8 für die Restflüssigkeit mit den Filterrückständen aufweist. Darüber hinaus ist in dem ringförmigen Gehäuseteil 5 ein Auslass 9 für das Filtrat vorgesehen.

Die Gehäuseteile 2, 3, 4 und 5 weisen denselben Außendurchmesser auf und sind so fluchtend zueinander angeordnet, dass durch sie ein nach außen hin im Wesentlichen zylinderförmiges Gehäuse 1 gebildet wird. Der Gehäuseteil 2 ist im Wesentlichen topfförmig und zum Gehäuseteil 3 (in Darstellung gemäß Fig. 1) nach oben hin offen ausgebildet und dient zur Aufnahme eines Filterplattenstapels bestehend aus Filterplatten 10 und 11, die jeweils abwechselnd mit Abstand zueinander angeordnet sind. Die Filterplatten 10 weisen einen kleineren Durchmesser als der des zylindrischen Innenraums des Gehäuseteils 2 auf, so dass sie mit Abstand zur Gehäusewand enden. Die Filterplatten 11 hingegen weisen den gleichen Durchmesser wie der Innenraum auf und sind bis an das Gehäuseteil 2 dichtend herangeführt. Die Filterplatten 10 und 11 sind mit Abstand zueinander innerhalb des Gehäuseteils 2 durch drei, jeweils um 120° um die Achse des Gehäuses versetzt zueinander angeordnete Filtratabzugsrohre 12 innerhalb des Gehäuses 1 fixiert und gehalten. Die Filterplatten, die hohl sind und deren Aufbau im Einzelnen noch weiter unten beschrieben ist, sind mit ihrem Inneren fluidleitend mit den Filtratabzugsrohren 12 verbunden, welche im Boden des Gehäuseteils 2 sowie im Deckelteil 3 in entsprechenden Ausnehmungen formschlüssig gehalten sind. Die Ausnehmungen im Deckelteil 3 bilden gleichzeitig Kanäle, die an entsprechend dazu fluchtende Ausnehmungen im ringförmigen Gehäuseteil 5 anschließen, die wiederum in einen Ringkanal münden, der mit dem Auslass 9 über einen radialen Kanal verbunden ist. Über die Filtratabzugsrohre 12 sind die Filterplatten 10 und 11 in vorbestimmtem Abstand zueinander gehalten, entsprechende Abstandshalter sind auf den Filtratabzugsrohren 12 jeweils zwischen einer Filterplatte 10 und einer Filterplatte 11 vorgesehen.

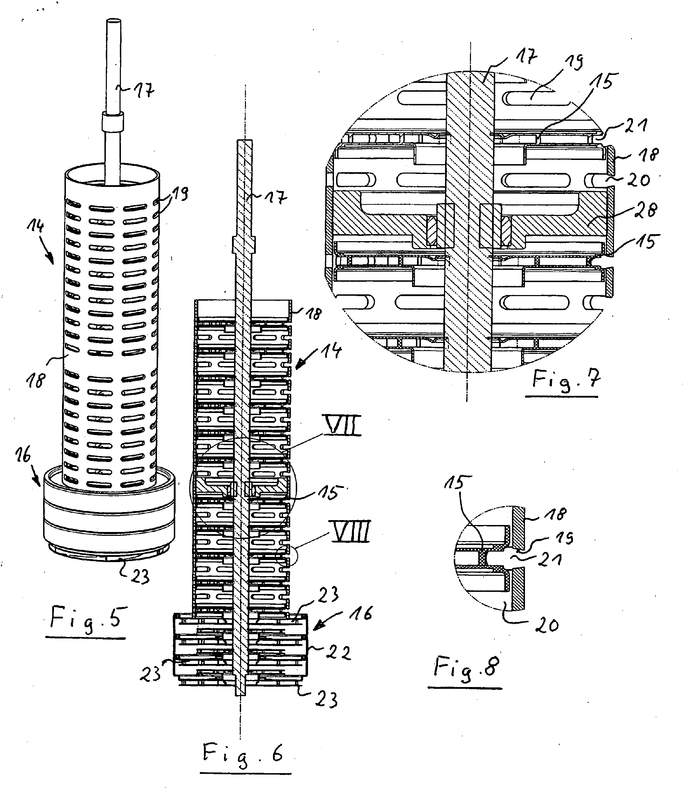

Die Filterplatten 10 und 11 weisen zentrale kreisrunde Ausnehmungen 13 auf, die in der Stapelanordnung zueinander fluchten und einen den Filterplattenstapel durchsetzenden Hohlraum bilden, in dem eine Kreiselpumpe 14 mit mehreren Kreiselrädern 15 angeordnet ist, deren Aufbau im Einzelnen anhand der Figuren 5 bis 8 ersichtlich ist. Die Kreiselpumpe 14 ist als selbstständig handhabbare Einheit zusammen mit einer vorgeschalteten Kreiselpumpe 16 und einer gemeinsamen Welle 17 ausgebildet. Die Kreiselpumpe 14 mit ihren Kreiselrädern 15 ist innerhalb eines zylindrischen Zwischengehäuses 18 angeordnet, welches eine Vielzahl von ringförmig über den Umfang verteilten langlochartigen Ausnehmungen 19 aufweist. Diese Ausnehmungen 19 liegen jeweils fluchtend zu den zwischen den Filterplatten 10 und 11 gebildeten Zwischenräumen sowie abwechselnd fluchtend zur Saugseite 20 bzw. Druckseite 21 eines Kreiselrades 15.

Die Kreiselräder 15 sind mit entsprechendem Abstand auf der Welle 17 drehfest montiert, wie anhand von Fig. 7 ersichtlich ist. Dabei ist jedes der Kreiselräder 15 sowohl saugseitig als auch druckseitig gegenüber dem Zwischengehäuse 18 abgedichtet, und zwar auf gleichem Umfang, nämlich dem Außendurchmesser, wie anhand von Fig. 8 dargestellt ist. Die Filterplatten 10 und 11 sind wiederum ebenfalls gegenüber dem Zwischengehäuse 18 nach innen hin abgedichtet und liegen jeweils zwischen den ringförmig angeordneten Reihen von Ausnehmungen 19 am Gehäuse 18 an, derart, dass eine mehrstufige Kreiselpumpe gebildet ist, wobei allerdings die einzelnen Pumpenstufen (Kreiselräder 15) nicht wie bei mehrstufigen Pumpen unmittelbar über das Gehäuse, sondern über die zwischen benachbarten Filterplatten 10, 11; 11, 10 gebildeten Zwischenräume zwischen den Filterplatten verbunden sind.

Der Kreiselpumpe 14 hydraulisch vorgeschaltet ist die Kreiselpumpe 16, bei welcher es sich in der dargestellten Ausführungsform um eine vierstufige Pumpe handelt, deren Pumpengehäuse 22 sich nach unten an das Zwischengehäuse 18 anschließt und das demgegenüber einen deutlich größeren Durchmesser aufweist. Entsprechend ist der Boden des Gehäuseteils 2 sowie der Bodenteil 4 mit einer entsprechenden Ausnehmung versehen, in welche das Pumpengehäuse 22 bündig eingreift bzw. die Teil des Pumpengehäuses der ersten Pumpenstufe bildet (siehe Fig. 1). Die Kreiselräder 23 weisen einen größeren Durchmesser als die Kreiselräder 15 auf und sind mittels des Pumpengehäuses 22 zu einer vierstufigen Pumpe 16 in Reihe geschaltet. Der Saugmund dieser Kreiselpumpe 16 ist über einen Kanal 24 mit dem Einlass 7 verbunden, über welchen die zu filtrierende Flüssigkeit zugeführt wird.

Die vorgeschaltete Kreiselpumpe 16, die hier beispielhaft als vierstufige Pumpe ausgebildet ist, kann grundsätzlich beliebig viele parallel oder in Reihe geschaltete Pumpenstufen aufweisen und dient im Wesentlichen dazu, die zu filternde Flüssigkeit dem Filterplattenstapel zuzuführen, und zwar in der erforderlichen Menge mit dem erforderlichen Druck.

Die Kreiselpumpe 14, die innerhalb des Filterplattenstapels angeordnet ist, dient im Wesentlichen zum Umwälzen der zwischen den Filterplatten 10 und 11 vorbeiströmenden Flüssigkeit, insbesondere zum Entfernen der sich dort ansammelnden Filterrückstände, kann jedoch auch zur Verbesserung der Durchströmung der Platten 10, 11 selbst dienen. Bei der Ausführung gemäß Fig. 1 gelangt die zu filternde Flüssigkeit über die vorgeschaltete Kreiselpumpe 16 zentral zum Saugmund des in Fig. 1 untersten Kreiselrads 15 der Kreiselpumpe 14, dessen Druckseite mit dem Freiraum zwischen der untersten Filterplatte 10 und dem Boden des Gehäuseteils 2 verbunden ist. Das von diesem Kreiselrad geförderte Fluid strömt also zunächst an der Unterseite der untersten Filterplatte 10 im Wesentlichen radial nach außen, wo es um 180° umgelenkt, um dann an der Oberseite der untersten Filterplatte 10 und der Unterseite der darüber liegenden untersten Filterplatte 11 wieder radial nach innen zur Saugseite 20 des nachfolgenden Kreiselrads 15 zu strömen. Bei der anhand von Fig. 1 dargestellten Ausführung werden also die Kreiselräder und Zwischenräume der Filterplatten 10, 11 nachfolgend in Reihe durchströmt, bis schließlich die Druckseite 21 des obersten Kreiselrads 15 die mit Filterrückständen behaftete Flüssigkeit längs der obersten Filterplatte 11 und der Unterseite des Deckelteils 3 radial nach außen zu einem Kanal 25 fördert, welcher achsparallel in der Wandung des Gehäuseteils 22 angeordnet ist und zum Auslass 8 im Bodenteil 4 führt.

Angetrieben werden die Kreiselpumpen 14 und 16 über die gemeinsame Welle 17, die mit ihrem oberen Wellenende durch das Kupplungsgehäuseteil 6 aus dem Gehäuse 1 zum Zwecke des Antriebs herausgeführt ist. Wie in Fig. 1 angedeutet, sitzt an dem Kupplungsgehäuseteil 6 an der Oberseite ein Elektromotor 26, dessen Welle mit dem Wellenende der Welle 17 antriebsverbunden ist und welcher die Kreiselpumpen 14 und 16 antreibt. Die Welle 17 ist innerhalb des Kupplungsgehäuseteils 6, aber schon außerhalb des Gehäuses 1 in einem Lager 27 gelagert. Darüber hinaus ist die Welle 17 etwa in der Mitte der Kreiselräder 15 und 23 mittels eines Lagers 28 gelagert, welches am Zwischengehäuse 18 abgestützt ist.

Die anhand der Figuren 5 und 6 dargestellte Einheit, bestehend aus den Kreiselpumpen 14, 16, der gemeinsamen Welle 17, dem unteren Lager 28 und den Gehäusen 18 und 22 kann nach Entfernen des Bodenteils 4 nach unten aus dem Filterplattenstapel und dem Gehäuse 1 herausgezogen werden. Soll hingegen lediglich der Filterplattenstapel aus dem Gehäuse 1 entnommen werden, so ist das Deckelteil 3 sowie das ringförmige Gehäuseteil 5 an der Oberseite vom Gehäuseteil 2 zu entfernen, wobei der auf den Filtratabzugsrohren 12 befestigte Filterplattenstapel aus dem Gehäuse herausgezogen wird.

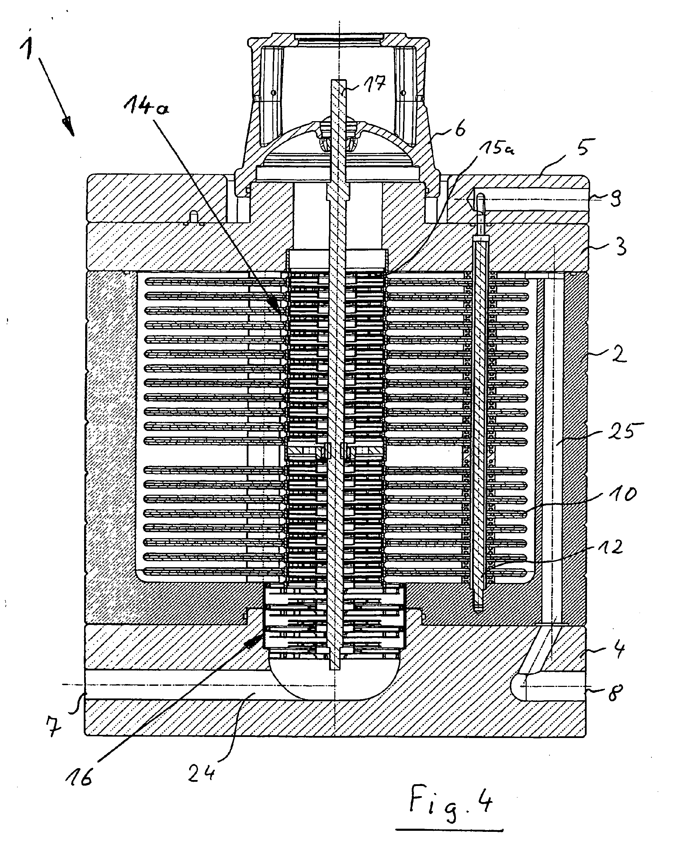

Bei der Ausführungsvariante gemäß Fig. 4 ist statt der mehrstufigen Kreiselpumpe 14 eine Kreiselpumpe 14a vorgesehen, die sich gegenüber der Kreiselpumpe 14 dadurch unterscheidet, dass die Anzahl der Kreiselräder 15a so ausgelegt ist, dass jedem Zwischenraum zwischen benachbarten Filterplatten 10 bzw. einer Filterplatte 10 und dem Gehäuseteil 2 bzw. dem Gehäuseteil 3 ein Kreiselrad 15a zugeordnet ist. Darüber hinaus sind die Kreiselräder 15a nicht hydraulisch in Reihe, sondern parallel geschaltet. Hierzu weisen sie einen den Saugmund fortsetzenden Ringkanal um die Welle 17 auf, über den alle Kreiselräder 15a parallel mit zu filternder Flüssigkeit versorgt werden, die mittels der Kreiselpumpe 16 zugeführt wird. Die Filterplatten 10 werden parallel sämtlichst von innen nach außen hin umströmt. Sie enden daher sämtlichst mit Abstand zum Gehäuseteil 2.

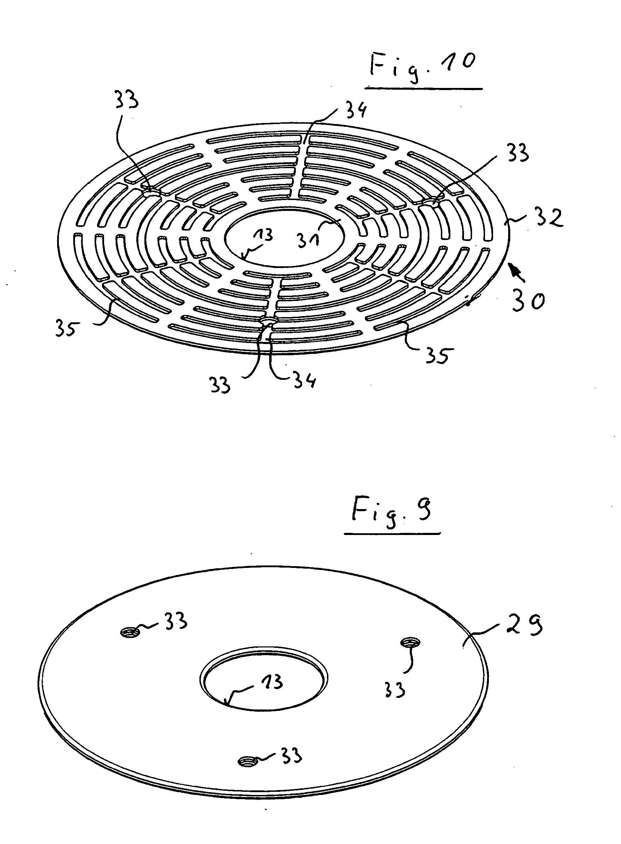

Der Aufbau einer Filterplatte 10 bzw. 11 ist anhand der Figuren 9 und 10 im Einzelnen dargestellt. Jede Filterplatte 10 bzw. 11 besteht aus zwei ringförmigen keramischen Scheiben 29 und einer dazwischen angeordneten, ebenfalls ringförmigen Stützscheibe 30. Die Stützscheibe 30 ist als Kunststoffspritzgussteil ausgebildet und weist einen geschlossenen Innenring 31 und einen geschlossenen Außenring 32 auf. Der Innendurchmesser des Innenrings 31 entspricht dem der Keramikscheibe 29, der Außendurchmesser des Außenrings 32 ebenfalls dem der Keramikscheibe 29, so dass beim Aufeinanderlegen zweier keramischer Scheiben 29 unter Eingliederung der Stützscheibe 30 eine Filterplatte 10 oder 11, je nach Abmessungen, entsteht, die sowohl zu ihrem Innenumfang 31 als auch zu ihrem Außenumfang 32 hin im Wesentlichen dicht abgeschlossen ist und deren Inneres ein Kanalsystem aufweist, welches das durch die Keramikscheibe 29 gelangte Filtrat zu den Filtratabzugsrohren 12 führt.

Zum Anschluss dieser Filtratabzugsrohre 12 sind sowohl in den Scheiben 29 als auch in der Scheibe 30 zueinander fluchtende Ausnehmungen 33 vorgesehen. Die Filtratabzugsrohre 12 sind so ausgebildet, dass sie im Bereich der Ausnehmungen 33 der Stützscheiben offen, im Übrigen jedoch geschlossen ausgebildet sind.

An die Ausnehmungen 33 in den Stützscheiben schließen sich radial zwischen dem Innenring 31 und dem Außenring 32 verlaufende Ausnehmungen 34 an, welche von ringförmigen, unterbrochenen Ausnehmungen 35 durchkreuzt sind, die wiederum zu radialen Ausnehmungen 34 führen. Wie die Fig. 10 verdeutlicht, ist auf diese Weise durch die Ausnehmungen 34 und 35 ein flächiges und feingliedriges Kanalnetz über die gesamte Fläche der Filterplatte gebildet, über das ein effektiver Filtratabzug einerseits und eine über die Fläche gleichmäßige Stützwirkung gegenüber den Keramikscheiben 29 andererseits erfolgt. Die so gebildeten Filterplatten 10 bzw. 11 sind zur im Wesentlichen dichten Anlage am Zwischengehäuse 18 vorgesehen, sowie, soweit es die Filterplatten 11 betrifft, zur dichtenden Anlage am Gehäuseteil 2 des Gehäuses 1.

Die vorstehend insbesondere anhand der Figuren 1 und 4 dargestellten Ausführungsbeispiele dienen im Wesentlichen zur Darstellung des erfindungsgemäßen Prinzips. Es versteht sich, dass nicht nur die Kreiselpumpe 16, sondern auch die Kreiselpumpe 14 wahlweise in parallel und/oder in Reihe geschalteten Pumpenstufen ausgebildet sein kann, je nach Anforderungen (Anzahl der Filterplatten, Zusammensetzung der zu filternden Flüssigkeit, Dimensionierung der Filterplatten etc.). Das in den Figuren dargestellte Gehäuseteil 2 kann ebenfalls modular ausgebildet sein, wobei dann zweckmäßigerweise jedem Kreiselrad ein Gehäuseabschnitt zugeordnet ist und die Gehäuseabschnitte zueinander formschlüssig und dichtend verbunden sind. Der Boden des Gehäuseteils 2 wird bei einer solchen Konstruktion zweckmäßigerweise dann dem Bodenteil 4 zugeordnet. Auch das Zwischengehäuse kann modular aufgebaut sein, wobei jedem Kreiselrad 14 vorteilhaft auch ein Zwischengehäuseteil zugeordnet ist. Die Zwischengehäuseteile können als Kunststoffspritzgussteile ausgebildet und ebenfalls formschlüssig miteinander verbunden sein. Eine Abdichtung der Gehäuseteile zueinander wird über eine plane Anlage hinausgehend in der Regel nicht erforderlich sein.

### Bezugszeichenliste

- 1 -: Gehäuse
- 2 -: Gehäuseteil
- 3 -: Deckelteil
- 4 -: Bodenteil
- 5 -: ringförmiges Gehäuseteil
- 6 -: Kupplungsgehäuseteil
- 7 -: Einlass
- 8 -: Auslass
- 9 -: Auslass für das Filtrat
- 10 -: Filterplatten, klein
- 11 -: Filterplatten, groß
- 12 -: Filtratabzugsrohre
- 13 -: Ausnehmungen
- 14 -: Kreiselpumpe (Fig. 1)
- 14a -: Kreiselpumpe (Fig. 4)
- 15 -: Kreiselräder (Fig. 1)
- 15a -: Kreiselräder (Fig. 4)
- 16 -: vorgeschaltete Kreiselpumpe
- 17 -: Welle
- 18 -: Zwischengehäuse
- 19 -: Ausnehmungen
- 20 -: Saugseite
- 21 -: Druckseite
- 22 -: Pumpengehäuse
- 23 -: Kreiselräder der vorgeschalteten Kreiselpumpe 16
- 24 -: Einlasskanal
- 25 -: Auslasskanal Filterrückstände
- 26 -: Elektromotor
- 27 -: Lager, außen
- 28 -: Lager, innen

- 29 -: Keramikscheiben
- 30 -: Stützscheiben
- 31 -: Innenring
- 32 -: Außenring
- 33 -: Ausnehmungen in 29 und 30
- 34 -: radiale Ausnehmungen
- 35 -: ringförmige Ausnehmungen

## Patentansprüche

1. Filtervorrichtung mit einem Gehäuse (1) und einem darin angeordneten Stapel von mit Abstand zueinander angeordneten Filterplatten (10, 11), mit einem Einlass (7) für die zu filtrierende Flüssigkeit, mit einem mit dem Inneren der Filterplatten (10, 11) leitungsverbundenen Auslass (9) für das Filtrat und mit einem sich durch den Stapel erstreckenden und durch Ausnehmungen (13) in den Filterplatten (10, 11) gebildeten Hohlraum, **dadurch gekennzeichnet, dass** der Filterplattenstapel gehäusefest angeordnet ist und dass innerhalb des Filterplattenstapels eine Kreiselpumpe (14) mit mehreren Kreiselrädern (15) zur Durchströmung des Filterplattenstapels angeordnet ist.

2. Filtervorrichtung nach Anspruch 1, **dadurch gekennzeichnet, dass** sich die Kreiselräder der Kreiselpumpe zwischen den Filterplatten des Filterplattenstapels erstrecken.

3. Filtervorrichtung nach Anspruch 2, **dadurch gekennzeichnet, dass** die Kreiselräder beidseitig zu den Filterplatten hin offen ausgebildet sind, derart, dass sie einen zentralen Saugbereich und zwei Druckseiten bilden.

4. Filtervorrichtung nach einem der vorhergehenden Ansprüche, **dadurch gekennzeichnet, dass** die Kreiselpumpe (14) mit mehreren Kreiselrädern (15) innerhalb des Hohlraums des Filterplattenstapels angeordnet ist.

5. Filtervorrichtung nach einem der vorhergehenden Ansprüche, **dadurch gekennzeichnet, dass** einem zwischen benachbarten Filterplatten (10, 11) gebildetem Zwischenraum oder einer Gruppe von benachbarten Zwischenräumen jeweils ein Kreiselrad (15) zugeordnet ist, das diesen Zwischenraum bzw. diese Zwischenräume mit Flüssigkeit beaufschlagt.

6. Filtervorrichtung nach einem der vorhergehenden Ansprüche, **dadurch gekennzeichnet, dass** die innerhalb des Plattenstapels angeordneten Kreiselräder (15) von einem rohrförmigen, vorzugsweise zylindrischen Zwischengehäuse (18) umgeben sind, das in dem Hohlraum sitzt, an den Plattenstapel vorzugsweise dichtend anschließt und im Bereich der Freiräume zwischen benachbarten Filterplatten Durchbrüche (19) aufweist, durch die die Druckseite (21) eines Kreiselrades (15) mit dem zugeordneten Zwischenraum fluidleitend verbunden ist.

7. Filtervorrichtung nach einem der vorhergehenden Ansprüche, **dadurch gekennzeichnet, dass** das Zwischengehäuse aus mehreren Gehäuseabschnitten aufgebaut ist, die vorzugsweise als Kunststoffspritzgussteile ausgebildet und formschlüssig miteinander verbunden sind.

8. Filtervorrichtung nach einem der vorhergehenden Ansprüche, **dadurch gekennzeichnet, dass** jedem Gehäuseabschnitt des Zwischengehäuses einer Filterplatte zugeordnet und gegenüber dieser radial abgedichtet ist.

9. Filtervorrichtung nach einem der vorhergehenden Ansprüche, **dadurch gekennzeichnet, dass** die innerhalb des Plattenstapels angeordneten Kreiselräder (15) bis nahe an das Zwischengehäuse (18) reichen, wobei diese Kreiselräder (15) sowohl saugseitig als auch druckseitig radial gegenüber dem Zwischengehäuse (18) vorzugsweise auf gleichem Durchmesser abgedichtet sind.

10. Filtervorrichtung nach einem der vorhergehenden Ansprüche, **dadurch gekennzeichnet, dass** den innerhalb des Plattenstapels angeordneten Kreiselrädern (15) ein oder mehrere Kreiselräder (23) innerhalb des Gehäuses (1) fluidisch vorgeschaltet sind.

11. Filtervorrichtung nach einem der vorhergehenden Ansprüche, **dadurch gekennzeichnet, dass** die den Kreiselrädern (15) innerhalb des Plattenstapels vorgeschalteten Kreiselräder (23) als mehrstufige Kreiselpumpe (16) ausgebildet und angeordnet sind, vorzugsweise in einer entsprechend ausgebildeten Ausnehmung des Gehäuses (1).

12. Filteranordnung nach einem der vorhergehenden Ansprüche, **dadurch gekennzeichnet, dass** das Gehäuse (1) mit seiner Innenseite an die Geometrie des Plattenstapels sowie der vorgeschalteten Kreiselräder (23) angepasst ausgebildet ist.

13. Filteranordnung nach einem der vorhergehenden Ansprüche, **dadurch gekennzeichnet, dass** das Gehäuse (1) im Wesentlichen aus einem Zylinderrohr (2) mit zwei endseitigen Deckeln (3, 4, 5) gebildet ist, wobei die Deckel (4, 5) zur Aufnahme von Ab- und/oder Zufuhrkanälen (7, 8, 9) ausgebildet sind.

14. Filtervorrichtung nach einem der vorhergehenden Ansprüche, **dadurch gekennzeichnet, dass** die den Kreiselrädern (15) innerhalb des Plattenstapels vorgeschalteten Kreiselräder (23) einen größeren Durchmesser als die innerhalb des Plattenstapels befindlichen haben.

15. Filtervorrichtung nach einem der vorhergehenden Ansprüche, **dadurch gekennzeichnet, dass** die Kreiselräder (15, 23) auf einer gemeinsamen Welle (17) drehfest angeordnet sind, und vorzugsweise zusammen mit dem Zwischengehäuse (18) eine zusammen handhabbare Einheit bilden.

16. Filtervorrichtung nach einem der vorhergehenden Ansprüche, **dadurch gekennzeichnet, dass** die die Kreiselräder (15, 23) tragende Welle (17) mindestens ein innerhalb des Plattenstapels angeordnetes Lager (28) aufweist, welches im Zwischengehäuse (18) abgestützt ist.

17. Filtervorrichtung nach einem der vorhergehenden Ansprüche, **dadurch gekennzeichnet, dass** die die Kreiselräder (15, 23) tragende Welle (17) zum Zwecke des Antriebs an einem Ende aus dem Gehäuse (1) herausgeführt und mit einem vorzugsweise am Gehäuse (1) befestigten Antriebsmotor (26) antriebsverbunden ist.

18. Filtervorrichtung nach einem der vorhergehenden Ansprüche, **dadurch gekennzeichnet, dass** das aus dem Gehäuse (1) herausgeführte Wellenende außerhalb des Gehäuses an diesem drehbar gelagert ist.

19. Filtervorrichtung nach einem der vorhergehenden Ansprüche, **dadurch gekennzeichnet, dass** die innerhalb des Plattenstapels angeordneten Kreiselräder (15a) hydraulisch parallel geschaltet und saugseitig über einen Kanal miteinander fluidleitend verbunden sind, und dass die Filterplatten (10) ebenfalls hydraulisch parallel geschaltet sind.

20. Filtervorrichtung nach einem der vorhergehenden Ansprüche, **dadurch gekennzeichnet, dass** mindestens zwei oder mehrere innerhalb des Plattenstapels angeordnete Kreiselräder (15) in Reihe oder gruppenweise in Reihe geschaltet sind und dass die Filterplatten (10, 11) entsprechend in Reihe geschaltet sind.

21. Filtervorrichtung nach einem der vorhergehenden Ansprüche, **dadurch gekennzeichnet, dass** der Plattenstapel innerhalb eines durch das Gehäuse (1) gebildeten zylindrischen Raums angeordnet ist, von mindestens einem, vorzugsweise drei parallel zur Stapelachse angeordneten Filtratabzugsrohren (12) durchsetzt ist, welche mit dem inneren der Filterplatten (10, 11) verbunden und gegenüber dem Äußeren abgedichtet sind und deren vorzugsweise jeweils beide Enden am Gehäuse (1) festgelegt sind.

22. Filtervorrichtung nach einem der vorhergehenden Ansprüche, **dadurch gekennzeichnet, dass** die Filterplatten (10, 11) durch zwei voneinander beabstandete Keramikscheiben (29) gebildet sind, zwischen denen eine Stützscheibe (30) angeordnet ist, wobei die Stützscheibe (30) zur Abfuhr des Filtrats mit Kanälen (34, 35) versehen ist.

23. Filtervorrichtung nach einem der vorhergehenden Ansprüche, **dadurch gekennzeichnet, dass** die Stützscheiben (30) die Keramikscheiben (29) von ihrem Innenumfang bis zu ihrem Außenumfang abstützen und mit sich in konzentrischen Ringen erstreckenden und diese kreuzenden radialen Kanälen (34, 35) versehen sind, die zu den anliegenden Keramikscheiben (29) hin offen ausgebildet sind und die zu Durchbrechungen (33) führen, welche die Filtratabzugsrohre (12) aufnehmen und mit diesen leitungsverbunden sind.

## Claims

1. A filter device with a housing (1) and with a stack, arranged therein, of filter plates (10, 11) arranged at a distance to one another, with an inlet (7) for the fluid to be filtered, with an outlet (9) for the filtrate, which is conductingly connected to the inside of the filter plates (10, 11), and with a cavity extending through the stack and formed by recesses (13) in the filter plates (10, 11), **characterised in that** the filter plate stack is arranged fixed to the housing and that a centrifugal pump (14) with several impellers (15) is arranged within the filter plate stack, for the flow through the filter plate stack.

2. A filter device according to claim 1, **characterised in that** the impellers of the centrifugal pump extend between the filter plates of the filter plate stack.

3. A filter device according to claim 2, **characterised in that** the impellers are designed open to the filter plates on both sides, in a manner such that they form a central suction region and two pressure sides.

4. A filter device according to one of the preceding claims, **characterised in that** the centrifugal pump (14) with several impellers (15) is arranged within the cavity of the filter plate stack.

5. A filter device according to one of the preceding claims, **characterised in that** in each case an impeller (15) is allocated to an intermediate space formed between adjacent filter plates (10,11), or a to group of adjacent intermediate spaces, said impeller impinging this intermediate space or these intermediate spaces with fluid.

6. A filter device according to one of the preceding claims, **characterised in that** the impellers (15) arranged within the plate stack are surrounded by a tubular, preferably cylindrical intermediate housing (18), which is seated in the cavity, connects to the plate stack in a preferably sealing manner, and comprises openings (19) in the region of the free spaces between adjacent filter plates, by way of which openings the pressure side (21) of an impeller (15) is connected to the allocated intermediate space in a fluid-leading manner.

7. A filter device according to one of the preceding claims, **characterised in that** the intermediate housing is constructed from several housing sections, which are preferable designed as plastic injection moulded parts and are connected to one another with a positive fit.

8. A filter device according to one of the preceding claims, **characterised in that** a filter plate is allocated to each housing section of the intermediate housing, and the housing section is radially sealed with respect to this filter plate.

9. A filter device according to one of the preceding claims, **characterised in that** the impellers (15) arranged within the plate stack reach up to the vicinity of the intermediate housing (18), wherein these impellers (15) are sealed radially with respect to the intermediate housing (18), preferably to the same diameter, on the suction side as well as pressure side.

10. A filter device according to one of the preceding claims, **characterised in that** one or more impellers (23), within the housing (1), are fluidically arranged upstream of the impellers (15) arranged within the plate stack.

11. A filter device according to one of the preceding claims, **characterised in that** the impellers (23) arranged upstream of the impellers (15) within the plate stack are designed and arranged as a multi-stage centrifugal pump (16), preferably in a suitably designed recess of the housing (1).

12. A filter device according to one of the preceding claims, **characterised in that** the housing (1) with its inner side is designed adapted to the geometry of the plate stack as well as to the impellers (23) arranged upstream.

13. A filter device according to one of the preceding claims, **characterised in that** the housing (1) is essentially formed from a cylinder tube (2) with two end-side lids (3, 4, 5), wherein the lids (4, 5) are designed for receiving discharge- and or supply channels (7, 8, 9).

14. A filter device according to one of the preceding claims, **characterised in that** the impellers (23) arranged upstream of the impellers (15), within the plate stack, have a greater diameter than those located within the plate stack.

15. A filter device according to one of the preceding claims, **characterised in that** the impellers (15, 23) are arranged in a rotationally fixed manner on a common shaft (17), and preferably together with the intermediate housing (18) form a unit which may be manipulated together.

16. A filter device according to one of the preceding claims, **characterised in that** the shaft (17) carrying the impellers (15, 23) comprises at least one bearing (28) arranged within the plate stack, said bearing being arranged in the intermediate housing (18).

17. A filter device according to one of the preceding claims, **characterised in that** the shaft (17) carrying the impellers (15, 23) is led out of the housing (1) at one end for the purpose of the drive, and is drive-connected to a drive motor (26), fastened preferably on the housing (1).

18. A filter device according to one of the preceding claims, **characterised in that** the shaft end which is led out of the housing (1) is rotatably mounted outside the housing on this.

19. A filter device according to one of the preceding claims, **characterised in that** the impellers (15a) arranged within the plate stack are arranged hydraulically in parallel, and on the suction side are connected to one another in a fluid-leading manner via a channel, and that the filter plates (10) are likewise arranged hydraulically in parallel.

20. A filter device according to one of the preceding claims, **characterised in that** at least two or more impellers (15) arranged within the plate stack are arranged in series or groupwise in series, and that the filter plates (10, 11) are arranged accordingly in series.

21. A filter device according to one of the preceding claims, **characterised in that** the plate stack is arranged within a cylindrical space formed by the housing (1), and is passed through by at least one, preferably three filtrate removal tubes (12) which are arranged parallel to the stack axis, which are connected to the inside of the filter plates (10, 11) and are sealed with respect to the outside, and whose, preferably in each case both ends are fixed on the housing (1).

22. A filter device according to one of the preceding claims, **characterised in that** the filter plates (10, 11) are formed by two ceramic disks (29) which are distanced to one another, between which a support disk (30) is arranged, wherein the support disk (30) is provided with channels (34, 35) for removal of the filtrate.

23. A filter device according to one of the preceding claims, **characterised in that** the support disks (30) support the ceramic disks (29) from their inner periphery up to their outer periphery and are provided with radial channels (34, 35) which extend in concentric rings and cross these, and which are formed open towards the bearing ceramic disks (29) and lead to openings (33) which receive the filtrate removal tubes (12) and are conductingly connected to these.

## Revendications

1. Dispositif de filtration comportant un boîtier (1) et une pile, disposée à l'intérieur, de plaques de filtration (10, 11) placées à distance les unes des autres, comportant une admission (7) du fluide à filtrer, comportant une sortie (9) pour le filtrat, reliée par conduite à l'intérieur des plaques de filtration (10, 11) et comportant un espace creux qui s'étend à travers la pile et est formé par des évidements (13) dans les plaques de filtration (10, 11), **caractérisé en ce que** la pile de plaques de filtration est disposée de façon fixe dans le boîtier, **en ce qu'**à l'intérieur de la pile de plaques de filtration est disposée une pompe centrifuge (14) présentant plusieurs roues centrifuges (15) qui permettent l'écoulement à travers la pile de plaques de filtration.

2. Dispositif de filtration selon la revendication 1, **caractérisé en ce que** les roues centrifuges de la pompe centrifuge s'étendent entre les plaques de filtration de la pile de plaques de filtration.

3. Dispositif de filtration selon la revendication 2, **caractérisé en ce que** les roues centrifuges sont conçues pour être ouvertes des deux côtés en direction des plaques de filtration de façon telle qu'elles forment une zone d'aspiration centrale et deux côtés de pression.

4. Dispositif de filtration selon l'une des revendications précédentes, **caractérisé en ce que** la pompe centrifuge (14) avec plusieurs roues centrifuges (15) est disposée au sein de l'espace creux de la pile de plaques de filtration.

5. Dispositif de filtration selon l'une des revendications précédentes, **caractérisé en ce que** chaque roue centrifuge (15) est associée à un espace intermédiaire formé entre des plaques de filtration (10, 11) adjacentes ou à un groupe d'espaces intermédiaires adjacents, laquelle roue centrifuge (15) apporte le fluide dans cet espace intermédiaire ou dans ces espaces intermédiaires.

6. Dispositif de filtration selon l'une des revendications précédentes, **caractérisé en ce que** les roues centrifuges (15) disposées à l'intérieur de la pile de plaques sont entourées par un boîtier intermédiaire (18) en forme de tube, de préférence cylindrique, qui repose dans l'espace creux, se raccorde de préférence de façon étanche à la pile de plaques et présente dans la zone des espaces libres entre les plaques de filtration adjacentes des passages (19) par lesquels le côté pression (21) d'une roue centrifuge (15) est relié par conduction de fluide à l'espace intermédiaire associé.

7. Dispositif de filtration selon l'une des revendications précédentes, **caractérisé en ce que** le boîtier intermédiaire est formé de plusieurs segments de boîtier qui sont de préférence conçus en tant que pièces plastiques moulées par injection et sont reliés entre eux par engagement de forme.

8. Dispositif de filtration selon l'une des revendications précédentes, **caractérisé en ce qu'**à chaque segment de boîtier du boîtier intermédiaire est associée une plaque de filtration et **en ce qu'**il est rendu étanche radialement vis-à-vis de celle-ci.

9. Dispositif de filtration selon l'une des revendications précédentes, **caractérisé en ce que** les roues centrifuges (15) disposées à l'intérieur de la pile de plaques vont presque jusqu'au boîtier intermédiaire (18), ces roues centrifuges (15) étant rendues étanches tant côté aspiration que côté pression radialement vis-à-vis de l'espace intermédiaire (18), de préférence sur le même diamètre.

10. Dispositif de filtration selon l'une des revendications précédentes, **caractérisé en ce qu'**une ou plusieurs roues centrifuges (23) sont placées au sein du boîtier (1), en amont sur le plan fluidique des roues centrifuges (15) disposées au sein de la pile de plaques.

11. Dispositif de filtration selon l'une des revendications précédentes, **caractérisé en ce que** les roues centrifuges (23) placées en amont des roues centrifuges (15) au sein de la pile de plaques sont conçues et disposées en tant que pompe centrifuge à plusieurs étages (16), de préférence dans un creux du boîtier (1) formé en conséquence.

12. Dispositif de filtration selon l'une des revendications précédentes, **caractérisé en ce que** le boîtier (1) est conçu sur sa face interne pour être adapté à la géométrie de la pile de plaques et des roues centrifuges (23) placées en amont.

13. Dispositif de filtration selon l'une des revendications précédentes, **caractérisé en ce que** le boîtier (1) est formé essentiellement d'un tube cylindrique (2) présentant deux couvercles d'extrémité (3, 4, 5), les couvercles (4, 5) étant conçus pour recevoir des canaux d'évacuation et/ou d'amenée (7, 8, 9).

14. Dispositif de filtration selon l'une des revendications précédentes, **caractérisé en ce que** les roues centrifuges (23) disposées en amont des roues centrifuges (15) au sein de la pile de plaques présentent un diamètre supérieur à celles se trouvant à l'intérieur de la pile de plaques.

15. Dispositif de filtration selon l'une des revendications précédentes, **caractérisé en ce que** les roues centrifuges (15, 23) sont disposées de façon solidaire en rotation sur un arbre conjoint (17) et forment de préférence avec le boîtier intermédiaire (18) une unité manipulable conjointement.

16. Dispositif de filtration selon l'une des revendications précédentes, **caractérisé en ce que** l'arbre (17) portant les roues centrifuges (15, 23) présente au moins un palier (28) disposé à l'intérieur de la pile de plaques et appuyé dans le boîtier intermédiaire (18).

17. Dispositif de filtration selon l'une des revendications précédentes, **caractérisé en ce que** l'arbre (17) portant les roues centrifuges (15, 23) à des fins d'entraînement est sorti du boîtier (1) au niveau d'une extrémité et est relié par entraînement à un moteur d'entraînement (26) fixé de préférence au niveau du boîtier (1).

18. Dispositif de filtration selon l'une des revendications précédentes, **caractérisé en ce que** l'extrémité d'arbre sortie du boîtier (1) est logée hors du boîtier de façon à pivoter au niveau de celui-ci.

19. Dispositif de filtration selon l'une des revendications précédentes, **caractérisé en ce que** les roues centrifuges (15a) disposées au sein de la pile de plaques sont montées parallèlement sur le plan hydraulique et sont reliées ensemble pour la conduite du fluide côté aspiration par un canal, et **en ce que** les plaques de filtration (10) sont également montées parallèlement sur le plan hydraulique.

20. Dispositif de filtration selon l'une des revendications précédentes, **caractérisé en ce qu'**au moins deux roues centrifuges (15), ou plus, disposées au sein de la pile de plaques sont montées en série ou par groupes en série et **en ce que** les plaques de filtration (10, 11) sont montées en série en conséquence.

21. Dispositif de filtration selon l'une des revendications précédentes, **caractérisé en ce que** la pile de plaques est disposée au sein d'un espace cylindrique formé par le boîtier (1), est traversée par au moins un, de préférence trois, tubes d'évacuation du filtrat (12) disposés parallèlement à l'axe de la pile, lesquels sont reliés à l'intérieur des plaques de filtration (10, 11) et sont rendus étanches vis-à-vis de l'extérieur, leurs deux extrémités de préférence étant respectivement fixées au niveau du boîtier (1).

22. Dispositif de filtration selon l'une des revendications précédentes, **caractérisé en ce que** les plaques de filtration (10, 11) sont formées par deux disques céramiques (29) à distance l'un de l'autre, entre lesquels est disposé un disque d'appui (30), le disque d'appui (30) étant muni de canaux (34, 35) pour évacuer le filtrat.

23. Dispositif de filtration selon l'une des revendications précédentes, **caractérisé en ce que** les disques d'appui (30) soutiennent les disques céramiques (29) depuis leur périphérie interne jusqu'à leur périphérie externe et sont munis de canaux radiaux (34, 35) s'étendant en cercles concentriques et coupant ceux-ci en croix, les canaux étant ouverts en direction des disques céramiques (29) adjacents et menant à des passages (33) qui reçoivent les tubes d'évacuation du filtrat (12) et sont reliés par conduite à ceux-ci.
